# FASCICULE DE BREVET EUROPEEN

(11) **EP 2 367 897 B1**
(45) Date de publication et mention de la délivrance du brevet: **01.04.2015**
(21) Numéro de dépôt: 09795461.4
(22) Date de dépôt: 18.11.2009
(51) Int. Cl.: C09K 5/04, B60H 1/00

(54) **COMPOSITION COMPRENANT DU 2,3,3,3-TETRAFLUOROPROPENE, PROCEDE DE CHAUFFAGE ET/OU CLIMATISATION D'UN VEHICULE**
ZUSAMMENSETZUNG MIT 2,3,3,3-TETRAFLUORPROPEN UND VERFAHREN ZUR BEHEIZUNG UND/ODER KLIMATISIERUNG EINES FAHRZEUGES
COMPOSITION INCLUDING 2,3,3,3-TETRAFLUOROPROPENE, METHOD FOR HEATING AND/OR AIR CONDITIONING A VEHICLE

(30) Priorité: 20.11.2008 FR 0857882; 31.03.2009 FR 0952043
(43) Date de publication de la demande: 28.09.2011
(73) Titulaire: Arkema France, 92700 Colombes (FR)
(72) Inventeur: RACHED, Wissam, F-69007 Lyon (FR)
(74) Mandataire: Dang, Doris
(86) Numéro de dépôt international: PCT/FR2009/052212
(87) Numéro de publication internationale: WO 2010/058126

(56) Documents cités:
- WO-A-2008/107623
- FR-A- 2 905 633
- US-A1- 2006 243 944

## Description

La présente invention concerne une composition comprenant du 2,3,3,3-tetrafluoropropène, apte à être utilisée en réfrigération, climatisation et pour le chauffage, notamment dans les pompes à chaleur.

Dans les véhicules automobiles, le moteur thermique comporte un circuit de circulation d'un fluide caloporteur qui est utilisé pour le refroidissement du moteur et également pour le chauffage de l'habitacle. A cet effet, le circuit comprend notamment une pompe et un aérotherme dans lequel circule un flux d'air qui récupère la chaleur emmagasinée par le fluide caloporteur afin de chauffer l'habitacle.

Par ailleurs, un système de climatisation destiné à refroidir l'habitacle d'un véhicule automobile comprend un évaporateur, un compresseur, un condenseur, un détendeur et un fluide susceptible de changer d'états (liquide/gaz) communément désigné fluide frigorigène. Le compresseur, directement entraîné par le moteur du véhicule à l'aide d'une courroie et d'une poulie, comprime le fluide frigorigène, le refoulant sous haute pression et à haute température vers le condenseur. Le condenseur, grâce à une ventilation forcée, provoque la condensation du gaz qui arrive à l'état gazeux à haute pression et haute température. Le condenseur liquéfie le gaz grâce à l'abaissement de température de l'air qui le traverse. L'évaporateur, est un échangeur thermique qui prélève des calories à l'air qui sera soufflé dans l'habitacle. Le détendeur permet de réguler le débit d'entrée du gaz dans la boucle via une modification de section de passage dépendant de la température et de la pression au niveau de l'évaporateur. Ainsi, l'air chaud venant de l'extérieur se refroidit en traversant l'évaporateur.

Le système de climatisation dans les voitures électriques est hermétique ; le compresseur est électrique et l'architecture du système peut être confinée avec un circuit intermédiaire de transfert de chaleur (type glycol).

Le fluide frigorigène largement utilisé dans la climatisation automobile est le 1,1,1,2 -tetrafluoroéthane (HFC-134a).

Le document WO 2008/107623 décrit un système de gestion d'énergie d'un vehicule automobile comprenant une boucle frigorifique réversible avec circulation d'un fluide frigorigène, des moyens d'inversion du cycle de fonctionnement de la boucle frigorifique mobiles entre une position en mode frigorifique et une position en mode pompe à chaleur, au moins une première source apte à récupérer l'énergie du fluide frigorigène, et au moins une seconde source apte à évaporer le fluide frigorigène suite à la détente dudit fluide de l'état liquide à l'état diphasique, les moyens d'inversion étant aptes à permettre un écoulement du fluide frigorigène de la première source de récupération en direction d'au moins une source d'évaporation, lorsqu'ils sont dans une position identique à celle correspondant au mode pompe à chaleur.

Toutefois, avec le HFC-134a comme fluide frigorigène dans le système tel que décrit le document WO 2008/107623, lorsque la température extérieure est autour de -15°C, une dépression commence à se former à l'évaporateur même avant que le compresseur ne soit lancé. Cette dépression qui conduit à une infiltration de l'air dans le système favorise les phénomènes de corrosion et la dégradation des composants tels que compresseur, échangeur et détendeur.

Le document US 2006/243944 divulgue des mélanges comprenant du 1,2,3,3,3-pentafluoropropène, 1,3,3,3-tétrafluoropropène, 2,3,3,3-tétrafluoropropène ou 3,3,3-trifluoropropène apte à être utilisés en réfrigération, climatisation et pompe à chaleur.

Le document FR 2905633 décrit une boucle de climatisation d'un véhicule automobile dont le fluide réfrigérant est à base de 1,1,1,2-tétrafluoropropène et de trifluoroiodométhane.

La présente invention a pour objectifs de fournir un fluide de transfert de chaleur et ses utilisations, notamment comme fluide frigorigène dans une boucle frigorifique pour empêcher l'air de pénétrer dans l'évaporateur de la boucle frigorifique au démarrage du compresseur et/ou d'améliorer le rendement de la boucle frigorifique.

La présente invention a donc pour objet une composition comprenant de 5 à 80 % en poids du 2,3,3,3-tetrafluoropropène (HFO-1234yf), de 5 à 45 % en poids de difluoromethane (HFC-32) et 2 à 50% en poids d'au moins un composé du groupe C choisi parmi le propane, le propylène et l'éthylène.

De préférence, la composition selon la présente invention comprend de 55 à 75 % en poids du 2,3,3,3-tetrafluoropropène, de 5 à 40 % en poids de difluorométhane et de 5 à 40 % en poids d'au moins un composé du groupe C choisi parmi le propane, le propylène et l'éthylène.

Avantageusement, la composition selon l'invention comprend de 60 à 70 % en poids du 2,3,3,3-tetrafluoropropylène, de 10 à 30 % en poids de difluorométhane et de 10 à 30 % en poids d'au moins un composé du groupe C choisi parmi le propane, le propylène et l'éthylène.

Le composé préféré du groupe C est le propane.

La composition selon la présente invention convient tout particulièrement comme fluide de transfert de chaleur en réfrigération, climatisation et pour le chauffage.

La composition selon la présente invention peut être utilisée en réfrigération en remplacement des fluides frigorigènes actuels tels que le R-22 ( chlorodifluorométhane), le R-404A (mélange constitué de 4 % en poids du 1,1,1,2-tetrafluoroéthane, 52 % en poids du trifluoroéthane et de 44 % en poids de pentafluoroéthane et le R-407C ( mélange constitué de 52 % en poids du 1,1,1,2-tetrafluoroéthane, 23 % en poids du difluorométhane et de 25 % en poids de pentafluoroéthane. Le R-407C est utilisé comme fluide de réfrigération de grandes surfaces (supermarché) et dans les transports frigorifiques. Le R-407C a toutefois un GWP de 1800.

La contribution à l'effet de serre d'un fluide est quantifiée par un critère, le GWP (Global Warning Potentials) qui résume le pouvoir de réchauffement en prenant une valeur de référence de 1 pour le dioxyde de carbone.

La composition selon la présente invention peut également être utilisée dans la climatisation, de préférence dans la climatisation automobile.

La composition selon la présente invention peut en outre être utilisée pour le chauffage, notamment dans les pompes à chaleur et de préférence pour le chauffage d'un habitacle de véhicule automobile.

La présente invention a aussi pour objet un procédé de chauffage et/ou de climatisation d'un habitacle de véhicule automobile à l'aide d'une boucle frigorifique réversible, dans laquelle circule un fluide frigorigène, comprenant un premier échangeur de chaleur, un détendeur, un second échangeur de chaleur, un compresseur et des moyens d'inversion du sens de circulation du fluide frigorigène caractérisé en ce que le fluide frigorigène comprend la composition telle que définie ci-dessus.

Les moyens d'inversion du sens de la circulation du fluide frigorigène dans la boucle frigorifique de manière à inverser le cycle de fonctionnement de celle-ci peuvent être constitués par une vanne à quatre voies.

Le fluide frigorigène peut aussi comprendre des stabilisants du 2,3,3,3-tetrafluoropropène. A titre d'exemples de stabilisant, on peut citer notamment le nitromethane, l'acide ascorbique, l'acide terephtalique, les azoles tels que le tolutriazole ou le benzotriazole, les composés phénoliques tels que le tocopherol, l'hydroquinone, le t-butyl hydroquinone, le 2,6-di-ter-butyl-4-methylphenol, les epoxydes (alkyl éventuellement fluoré ou perfluoré ou alkenyl ou aromatique) tels que les n-butyl glycidyl ether, hexanediol diglycidyl ether, allyl glycidyl ether, butylphenylglycidyl ether, les phosphites, les phosphates, les phosphonates, les thiols et lactones.

Suivant le mode de fonctionnement de la boucle, frigorifique ou pompe à chaleur, le premier échangeur de chaleur peut jouer le rôle d'évaporateur ou de récupérateur d'énergie. Il en est de même pour le second échangeur de chaleur. En mode frigorifique, le second échangeur permet le refroidissement du flux d'air destiné à être pulsé à l'intérieur de l'habitacle du véhicule automobile. En mode pompe à chaleur, le second échangeur permet de réchauffer le flux d'air destiné à l'habitacle du véhicule automobile.

Le premier et second échangeurs de chaleur sont du type air /fluide frigorigène. On peut aussi utiliser des échangeurs liquide / fluide frigorigène de sorte que le liquide joue le rôle de fluide intermédiaire et transmettre de l'énergie à l'air.

Dans le procédé selon la présente invention la boucle frigorifique peut être couplée thermiquement, à travers les échangeurs de chaleur, avec le circuit de refroidissement du moteur. Ainsi, la boucle peut comprendre au moins un échangeur de chaleur traversé à la fois par le fluide frigorigène et par un fluide caloporteur, notamment l'air ou l'eau du circuit de refroidissement du moteur thermique.

Selon une variante du procédé, le premier échangeur de chaleur est traversé à la fois par le fluide frigorigène et par des gaz d'échappement issus du moteur thermique du véhicule automobile ; ces derniers peuvent communiquer thermiquement avec un circuit de fluide caloporteur.

La boucle frigorifique dans le procédé, selon la présente invention, peut comprendre en dérivation au moins un échangeur de chaleur communiquant thermiquement avec un flux d'air, destiné à être admis à l'intérieur du moteur thermique du véhicule automobile, ou avec des gaz d'échappement issus du moteur thermique automobile.

Le procédé selon la présente invention convient tout particulièrement lorsque la température extérieure est inférieure à -20°C, de préférence inférieure à -30°C.

Le procédé selon la présente invention convient également aux véhicules automobiles hybrides qui sont conçus pour fonctionner en alternance sur moteur thermique et moteur électrique. Il permet de gérer au mieux les apports en énergie selon les conditions climatiques (chaud ou froid) tant pour l'habitacle que pour la batterie et notamment d'apporter du chaud ou du froid à la batterie à travers un circuit de fluide caloporteur.

La boucle frigorifique réversible, dans laquelle circule le fluide frigorigène comprenant la composition décrite ci-dessus, installée dans des véhicules automobiles convient particulièrement pour la récupération d'énergie du moteur thermique et/ou de la batterie électrique utile pour le chauffage de l'habitacle et le moteur thermique pendant une phase de démarrage à froid. Cette boucle frigorifique réversible, lorsqu'elle comprend une pompe, peut fonctionner en mode Rankine (c'est-à-dire le compresseur fonctionne comme une turbine) pour valoriser l'énergie thermique produite par le moteur thermique et véhiculée ensuite par le fluide frigorigène, après transfert thermique.

L'invention a également pour objet un dispositif comprenant la boucle frigorifique tel que décrit précédemment.

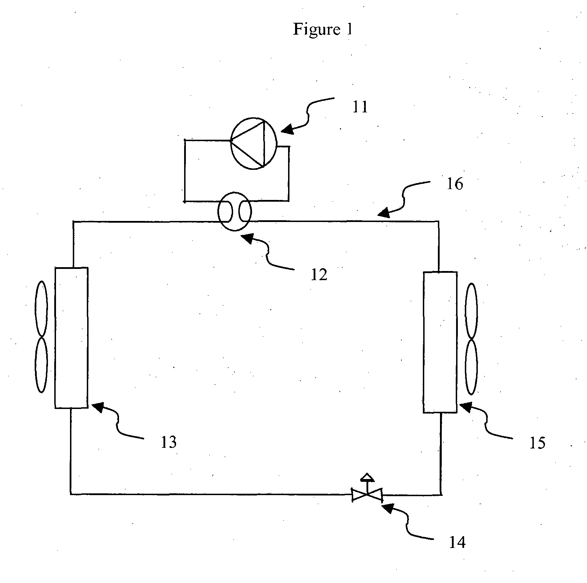

Selon un premier mode de réalisation de l'invention, représenté schématiquement par la Figure 1, la boucle frigorifique (16) comprend un premier échangeur de chaleur (13), un détendeur (14), un second échangeur de chaleur (15), un compresseur (11) et une vanne à quatre voies (12). Le premier et second échangeurs de chaleur sont du type air/ fluide frigorigène. Le premier échangeur de chaleur (13) est traversé par le fluide frigorigène de la boucle (16) et par le flux d'air amené par un ventilateur. Une partie ou la totalité de ce même flux d'air, traverse aussi un échangeur de chaleur du circuit de refroidissement du moteur (non représenté sur la figure). De la même manière, le second échangeur (15) est traversé par un flux d'air amené par un ventilateur. Une partie ou la totalité de ce flux d'air traverse aussi un autre échangeur de chaleur du circuit de refroidissement du moteur (non représenté sur la figure). Le sens de circulation de l'air est fonction du mode de fonctionnement de la boucle (16) et des besoins du moteur thermique. Ainsi, quand le moteur thermique est en régime stationnaire et la boucle (16) en mode pompe à chaleur, l'air peut être chauffé par l'échangeur du circuit de refroidissement du moteur thermique puis, soufflé sur l'échangeur (13) pour accélérer l'évaporation du fluide de la boucle (16) et donc améliorer les performances de cette boucle.

Les échangeurs du circuit de refroidissement peuvent être activés à l'aide des vannes suivant les besoins du moteur thermique (chauffage de l'air entrant dans le moteur ou valorisation d'énergie produite par ce moteur).

En mode frigorifique, le fluide frigorigène mis en mouvement par le compresseur (11) traverse, via la vanne (12), l'échangeur (13) jouant le rôle de condenseur (c'est-à-dire dégage des calories vers l'extérieur), ensuite le détendeur (14), puis l'échangeur (15) jouant le rôle d'évaporateur permettant ainsi le refroidissement du flux d'air destiné à être pulsé à l'intérieur de l'habitacle du véhicule automobile.

En mode pompe à chaleur, le sens d'écoulement du fluide frigorigène est inversé par l'intermédiaire de la vanne (12). L'échangeur de chaleur (15) joue le rôle de condenseur tandis que l'échangeur (13) joue le rôle d'évaporateur. L'échangeur de chaleur (15) permet alors de réchauffer le flux d'air destiné à l'habitacle du véhicule automobile.

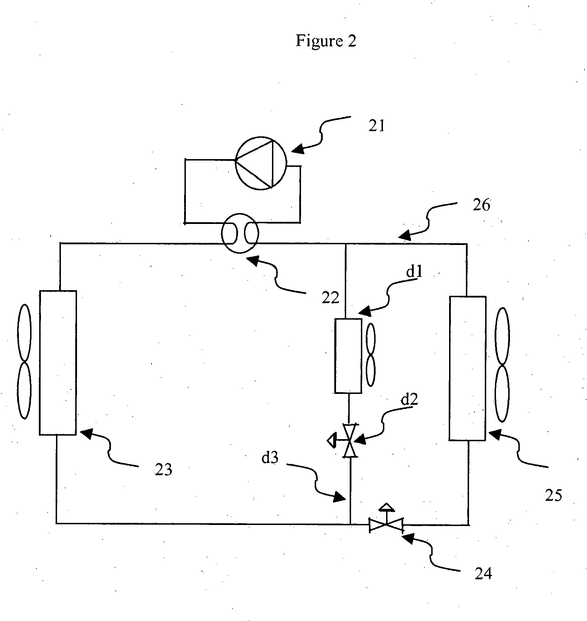

Selon un deuxième mode de réalisation de l'invention, représenté schématiquement par la Figure 2, la boucle frigorifique (26) comprend un premier échangeur de chaleur (23), un détendeur (24), un second échangeur de chaleur (25), un compresseur (21), une vanne à quatre voies (22) et une branche de dérivation (d3) montée d'une part à la sortie de l'échangeur (23), et d'autre part à la sortie de l'échangeur (25), en considérant la circulation du fluide en mode frigorifique. Cette branche comprend un échangeur de chaleur (d1) traversé par un flux d'air ou un flux de gaz d'échappement destiné à être admis à l'intérieur du moteur thermique et un détendeur (d2). Le premier et second échangeurs (23 et 25) de chaleur sont du type air/ fluide frigorigène. Le premier échangeur de chaleur (23) est traversé par le fluide frigorigène de la boucle (26) et par le flux d'air amené par un ventilateur. Une partie ou la totalité de ce même flux d'air, traverse aussi un échangeur de chaleur du circuit de refroidissement du moteur (non représenté sur la figure). De la même manière, le second échangeur (25) est traversé par un flux d'air amené par un ventilateur. Une partie ou la totalité de ce flux d'air traverse aussi un autre échangeur de chaleur du circuit de refroidissement du moteur (non représenté sur la figure). Le sens de circulation de l'air est fonction du mode de fonctionnement de la boucle (26) et des besoins du moteur thermique. A titre d'exemple, quand le moteur thermique est en régime stationnaire et la boucle (26) en mode pompe à chaleur, l'air peut être chauffé par l'échangeur du circuit de refroidissement du moteur thermique puis, soufflé sur l'échangeur (23) pour accélérer l'évaporation du fluide de la boucle (26) et améliorer les performances de cette boucle.

Les échangeurs du circuit de refroidissement peuvent être activés à l'aide des vannes suivant les besoins du moteur thermique (chauffage de l'air entrant dans le moteur ou valorisation d'énergie produite par ce moteur).

L'échangeur de chaleur (d1) peut aussi être activé suivant les besoins énergétiques que ce soit en mode frigorifique ou en mode pompe à chaleur. Des vannes d'arrêt peuvent être installées sur la branche (d3) pour activer ou désactiver cette branche.

L'échangeur (d1) est traversé par un flux d'air amené par un ventilateur. Ce même flux d'air peut traverser un autre échangeur de chaleur du circuit de refroidissement du moteur et aussi d'autres échangeurs placés sur le circuit des gaz d'échappement, sur l'arrivée d'air au moteur ou sur la batterie dans les voitures hybrides.

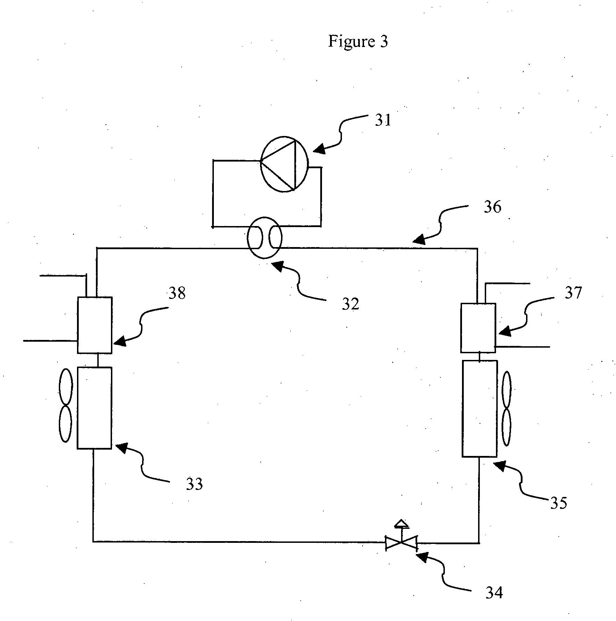

Selon un troisième mode de réalisation de l'invention, représenté schématiquement par la Figure 3, la boucle frigorifique (36) comprend un premier échangeur de chaleur (33), un détendeur (34), un second échangeur de chaleur (35), un compresseur (31) et une vanne à quatre voies (32). Le premier et second échangeurs (33 et 35) de chaleur sont du type air/ fluide frigorigène. Le fonctionnement des échangeurs (33 et 35) est identique au premier mode de réalisation présenté à la Figure 1. Deux échangeurs fluide/liquide (38 et 37) sont installés à la fois sur le circuit de la boucle frigorifique (36) et sur le circuit de refroidissement du moteur thermique ou sur un circuit secondaire d'eau glycolée. L'installation des échangeurs fluide/liquide sans passer par un fluide intermédiaire gazeux (air) contribue à l'amélioration des échanges thermiques par rapport aux échangeurs air / fluide.

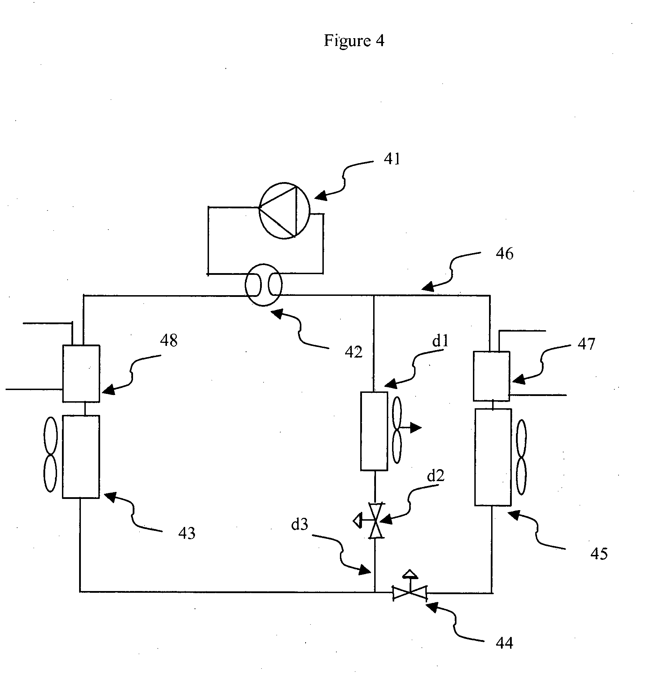

Selon un quatrième mode de réalisation de l'invention, représenté schématiquement par la Figure 4, la boucle frigorifique (46) comprend une première série échangeur de chaleur (43 et 48), un détendeur (44), une seconde série échangeur de chaleur (45 et 47), un compresseur (41) et une vanne à quatre voies (42). Une branche de dérivation (d1) montée d'une part à la sortie de l'échangeur (43), et d'autre part à la sortie de l'échangeur (47), en considérant la circulation du fluide en mode frigorifique. Cette branche comprend un échangeur de chaleur (d1) traversé par un flux d'air ou un flux de gaz d'échappement destiné à être admis à l'intérieur du moteur thermique et un détendeur (d2). Le fonctionnement de cette branche est identique au second mode de réalisation présenté à la Figure 2.

Les échangeurs (43 et 45) de chaleur sont du type air/ fluide frigorigène et les échangeurs (48 et 47) sont du type liquide/fluide frigorigène. Le fonctionnement de ces échangeurs est identique au troisième mode de réalisation présenté à la Figure 3.

Le procédé selon la présente invention convient également aux véhicules automobiles électriques qui sont conçus pour fonctionner avec une batterie. Il permet de gérer au mieux les apports en énergie selon les conditions climatiques (chaud ou froid) tant pour l'habitacle que pour la batterie et notamment d'apporter du chaud ou du froid à la batterie à travers un circuit de fluide caloporteur.

### PARTIE EXPERIMENTALE

Des simulations des performances du fluide frigorigène dans les conditions de fonctionnement de pompe à chaleur dans les véhicules et en fixant la température au condenseur à 30°C sont données ci-dessous.
Température de condensation : +30°C (T cond)
Température entrée compresseur : +5°C (Te comp)
Température sortie évaporateur : -30°C (Temp sortie évap)
Evap P : est la pression à l'évaporateur
Cond P : est la pression au condenseur
T sortie comp: est la température à la sortie compresseur
Taux : le taux de compression est le rapport de la haute pression sur la basse pression. COP : coefficient de performance et est défini, lorsqu'il s'agit d'une pompe à chaleur comme étant la puissance chaude utile fournie par le système sur la puissance apportée ou consommée par le système.
CAP : capacité volumétrique, c'est la capacité calorifique par unité de volume (kJ/m³) % CAP ou COP c'est le rapport de la valeur du CAP ou COP de la composition selon la présente invention par rapport à ceux du R-407C
Rendement isentropique du compresseur : c'est le rapport entre l'énergie réelle transmise au fluide et l'énergie isentropique.

Le rendement isentropique du compresseur est considéré égal à 0,7.

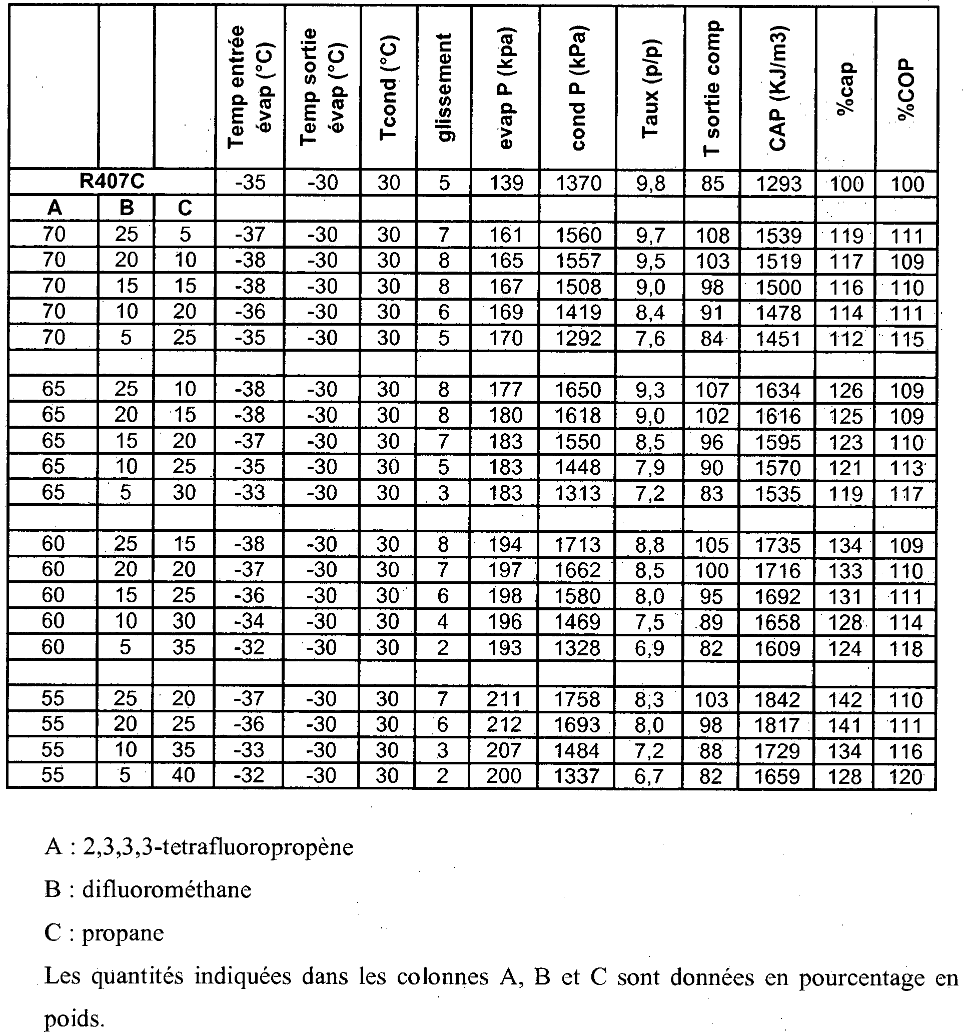

## Revendications

1. Composition comprenant de 5 à 80 % en poids du 2,3,3,3-tetrafluoropropène, de 5 à 45 % en poids de difluorométhane et 2 à 50 % en poids d'au moins un composé du groupe C choisi parmi le propane, le propylène et l'éthylène.

2. Composition selon la revendication 1 **caractérisée en ce qu'**elle comprend de 55 à 75 % en poids du 2,3,3,3-tetrafluoropropylène, de 5 à 40 % en poids de difluorométhane et de 5 à 40 % en poids d'au moins un composé du groupe C choisi parmi le propane, le propylène et l'éthylène.

3. Composition selon la revendication 1 **caractérisée en ce qu'**elle comprend de 60 à 70 % en poids du 2,3,3,3-tetrafluoropropylène, de 10 à 30 % en poids de difluorométhane et de 10 à 30 % en poids d'au moins un composé du groupe C choisi parmi le propane, le propylène et l'éthylène.

4. Procédé de chauffage et/ou de climatisation d'un habitacle de véhicule automobile à l'aide d'une boucle frigorifique réversible, dans laquelle circule un fluide frigorigène, comprenant un premier échangeur de chaleur, un détendeur, un second échangeur de chaleur, un compresseur et des moyens d'inversion du sens de circulation du fluide frigorigène **caractérisé en ce que** le fluide frigorigène comprend la composition selon l'une quelconque des revendications précédentes.

5. Procédé selon la revendication 4 **caractérisé en ce que** le premier et second échangeurs sont du type air / fluide frigorigène.

6. Procédé selon la revendication 4 **caractérisé en ce que** le premier et second échangeurs sont de type liquide / fluide frigorigène avec l'utilisation d'un circuit secondaire pour transmettre l'énergie a l'air destiné a l'habitacle.

7. Procédé selon l'une quelconque des revendications 4 à 6 **caractérisé en ce que** la boucle frigorifique est couplée thermiquement avec le circuit de refroidissement du moteur thermique.

8. Procédé selon l'une quelconque des revendications 4 à 7 **caractérisé en ce que** le premier échangeur de chaleur est traversé à la fois par le fluide frigorigène et par des gaz d'échappement issus du moteur thermique du véhicule automobile.

9. Procédé selon l'une quelconque des revendications 4 à 8 **caractérisé en ce que** la boucle peut comprendre en dérivation au moins un échangeur de chaleur communiquant thermiquement avec un flux d'air, destiné à être admis à l'intérieur du moteur thermique du véhicule automobile, ou avec des gaz d'échappement issus du moteur thermique automobile.

10. Procédé selon l'une quelconque des revendications 4 à 9 **caractérisé en ce que** la boucle frigorifique est installée dans les véhicules pour la récupération d'énergie du moteur thermique et/ou de la batterie électrique.

11. Dispositif comprenant la boucle frigorifique réversible définie dans l'une quelconque des revendications 4 à 10.

12. Utilisation de la composition selon l'une quelconque des revendications 1 à 3 comme fluide de transfert de chaleur.

13. Utilisation de la composition selon l'une quelconque des revendications 1 à 3 en remplacement du R-22, R-407C et R-404A.

## Patentansprüche

1. Zusammensetzung, umfassend 5 bis 80 Gewichts-% an 2,3,3,3-Tetrafluorpropen, 5 bis 45 Gewichts-% an Difluormethan und 2 bis 50 Gewichts-% mindestens einer Verbindung der Gruppe C, die aus Propan, Propylen und Ethylen ausgewählt ist.

2. Zusammensetzung nach Anspruch 1, **dadurch gekennzeichnet, dass** sie 55 bis 75 Gewichts-% an 2,3,3,3-Tetrafluorpropylen, 5 bis 40 Gewichts-% an Difluormethan und 5 bis 40 Gewichts-% mindestens einer Verbindung der Gruppe C umfasst, wobei letztere aus Propan, Propylen und Ethylen ausgewählt ist.

3. Zusammensetzung nach Anspruch 1, **dadurch gekennzeichnet, dass** sie 60 bis 70 Gewichts-% an 2,3,3,3-Tetrafluorpropylen, 10 bis 30 Gewichts-% an Difluormethan und 10 bis 30 Gewichts-% mindestens einer Verbindung der Gruppe C umfasst, wobei letztere aus Propan, Propylen und Ethylen ausgewählt ist.

4. Verfahren zum Beheizen und/oder Klimatisieren einer Fahrgastzelle eines Kraftfahrzeugs mit Hilfe einer kühlend wirkenden Schleife mit Umkehrbetrieb, in welcher ein Kühlfluid strömt, wobei sie einen ersten Wärmetauscher, eine Entspannungsvorrichtung, einen zweiten Wärmetauscher, einen Kompressor sowie Mittel zum Umkehren der Strömungsrichtung des Kühlfluids umfasst, **dadurch gekennzeichnet, dass** das Kühlfluid die Zusammensetzung nach einem beliebigen der vorhergehenden Ansprüche umfasst.

5. Verfahren nach Anspruch 4, **dadurch gekennzeichnet, dass** der erste und der zweite Tauscher vom Typ Luft/Kühlfluid sind.

6. Verfahren nach Anspruch 4, **dadurch gekennzeichnet, dass** der erste und der zweite Tauscher vom Typ Flüssigkeit/Kühlfluid sind, wobei ein Sekundärkreislauf dazu verwendet wird, die Energie an die Luft zu übertragen, welche für die Fahrgastzelle bestimmt ist.

7. Verfahren nach einem beliebigen der Ansprüche 4 bis 6, **dadurch gekennzeichnet, dass** die kühlend wirkende Schleife thermisch mit dem Kühlkreislauf des Verbrennungsmotors gekoppelt ist.

8. Verfahren nach einem beliebigen der Ansprüche 4 bis 7, **dadurch gekennzeichnet, dass** der erste Wärmetauscher sowohl von dem Kühlfluid als auch von den Abgasen, welche aus dem Verbrennungsmotor des Kraftfahrzeugs stammen, durchströmt wird.

9. Verfahren nach einem beliebigen der Ansprüche 4 bis 8, **dadurch gekennzeichnet, dass** von der Schleife mindestens ein Wärmetauscher abzweigen kann, der mit einem Luftstrom, welcher dazu bestimmt ist, ins Innere des Verbrennungsmotors des Kraftfahrzeugs geleitet zu werden, oder mit den Abgasen, welche aus dem Kraftfahrzeugverbrennungsmotor stammen, thermisch in Verbindung steht.

10. Verfahren nach einem beliebigen der Ansprüche 4 bis 9, **dadurch gekennzeichnet, dass** die kühlend wirkende Schleife in den Fahrzeugen eingebaut wird, um Energie vom Verbrennungsmotor und/oder von der elektrischen Batterie zurückzugewinnen.

11. Vorrichtung, die eine kühlend wirkende Schleife mit Umkehrbetrieb gemäß der Begriffsbestimmung in einem beliebigen der Ansprüche 4 bis 10 umfasst.

12. Verwendung der Zusammensetzung nach einem beliebigen der Ansprüche 1 bis 3 als Wärmeübertragungsfluid.

13. Verwendung der Zusammensetzung nach einem beliebigen der Ansprüche 1 bis 3, um R-22, R-407C und R-404A zu ersetzen.

## Claims

1. Composition containing 5 to 80 wt% of 2,3,3,3-tetrafluoropropene, 5 to 45 wt% of difluoromethane and 2 to 50 wt% of at least one group-C compound chosen from propane, propylene and ethylene.

2. Composition according to Claim 1, **characterized in that** it contains 55 to 75 wt% of 2,3,3,3-tetrafluoropropylene, 5 to 40 wt% of difluoromethane and 5 to 40 wt% of at least one group-C compound chosen from propane, propylene and ethylene.

3. Composition according to Claim 1, **characterized in that** it contains 60 to 70 wt% of 2,3,3,3-tetrafluoropropylene, 10 to 30 wt% of difluoromethane and 10 to 30 wt% of at least one group-C compound chosen from propane, propylene and ethylene.

4. Method of heating and/or air conditioning a motor vehicle cabin using a reversible refrigeration loop through which a refrigerant circulates, comprising a first heat exchanger, a pressure regulator, a second heat exchanger, a compressor and means of reversing the direction of flow of the refrigerant, **characterized in that** the refrigerant comprises the composition according to any one of the preceding claims.

5. Method according to Claim 4, **characterized in that** the first and second exchangers are of the air/refrigerant type.

6. Method according to Claim 4, **characterized in that** the first and second exchangers are of the liquid/refrigerant type with the use of a secondary circuit for transmitting energy to the air intended for the cabin.

7. Method according to any one of Claims 4 to 6, **characterized in that** the refrigeration loop is thermally coupled to the combustion engine cooling circuit.

8. Method according to any one of Claims 4 to 7, **characterized in that** the first heat exchanger has both the refrigerant and the exhaust gases from the combustion engine of the motor vehicle passing through it.

9. Method according to any one of Claims 4 to 8, **characterized in that** the loop may, as a branch-off, comprise at least one heat exchanger thermally communicating with an air stream intended to be admitted into the combustion engine of the motor vehicle, or with the exhaust gases emanating from the motor vehicle combustion engine.

10. Method according to any one of Claims 4 to 9, **characterized in that** the refrigerating loop is installed in the vehicles for recuperating energy from the combustion engine and/or from the electric battery.

11. Device comprising the reversible refrigerating loop defined in any one of Claims 4 to 10.

12. Use of the composition according to any one of Claims 1 to 3 as heat transfer fluid.

13. Use of the composition according to any one of Claims 1 to 3 as a replacement for R-22, R-407C and R-404A.
